# FASCICULE DE BREVET EUROPEEN

(11) **EP 2 218 641 B1**
(45) Date de publication et mention de la délivrance du brevet: **22.11.2017**
(21) Numéro de dépôt: 10153238.0
(22) Date de dépôt: 10.02.2010
(51) Int. Cl.: B64C 1/18, H02G 3/38, H01R 25/14

(54) **Élément de réseau de retour de courant pour aéronef**
Rückströmungnetzwerkelement für Flugzeuge
Current retour network element for aircraft

(30) Priorité: 11.02.2009 FR 0950853
(43) Date de publication de la demande: 18.08.2010
(73) Titulaire: Airbus Operations (Société par actions simplifiée), 31060 Toulouse (FR)
(72) Inventeur: Gallant, Guillaume, 31480 LAREOLE (FR); Charon, Pierre, 31100 TOULOUSE (FR)
(74) Mandataire: Augarde, Eric

(56) Documents cités:
- WO-A-2005/071788
- FR-A- 2 914 622
- US-A- 3 781 567
- US-A- 5 127 601
- US-A1- 2005 213 278
- US-B1- 7 351 075

## Description

### DOMAINE TECHNIQUE

La présente invention concerne de manière générale le retour de courant pour les appareils électriques embarqués sur un aéronef, et porte plus particulièrement sur un élément de réseau de retour de courant pour aéronef.

### ÉTAT DE LA TECHNIQUE ANTÉRIEURE

L'alimentation électrique des appareils électriques embarqués sur un aéronef est habituellement réalisée par un câble d'alimentation en courant électrique et par un réseau de retour de courant réalisé par la structure de l'aéronef.

Généralement, les éléments du fuselage et de sa structure primaire (panneaux, cadres, lisses) sont réalisés en matériau métallique, ce qui autorise la formation d'un réseau électrique de retour des courants fonctionnel et de défaut.

Cependant, les éléments de structure du fuselage sont de plus en plus souvent réalisés en matériau composite comprenant un mélange de fibres et de résine, dans le but de réaliser un gain de masse important tout en préservant ou améliorant les caractéristiques mécaniques desdits éléments de structure.

Les matériaux composites présentant une faible conductivité électrique, les éléments de structure de fuselage en matériau composite ne peuvent plus former de réseau de retour de courant.

Il est alors connu d'utiliser la structure primaire métallique du ou des planchers de l'aéronef pour former un réseau, ou un élément de réseau, de retour de courant.

Un plancher d'aéronef intègre habituellement des longerons et traverses métalliques assemblés au moyen de moyens métalliques de jonction.

Ces moyens métalliques de jonction réalisent donc une jonction structurale, mais également électrique puisqu'ils assurent la continuité électrique entre les longerons et les traverses du plancher, formant ainsi un élément de réseau de retour de courant.

Cependant, la continuité électrique n'est obtenue qu'à la suite d'une opération dite de métallisation réalisée lors du cycle de production.

En effet, une peinture de protection contre la corrosion recouvre généralement les pièces métalliques, peinture qui n'est habituellement pas conductrice. D'autre part, un mastic d'interposition est souvent présent au niveau des jonctions structurales entre les pièces métalliques afin d'éviter les phénomènes d'usure de contact entre lesdites pièces.

L'opération de métallisation, effectuée généralement manuellement, consiste alors à enlever le mastic d'interposition et à décaper la peinture, pour faire apparaître localement le métal de base de la pièce métallique. Les moyens de jonction peuvent ensuite être montés sur ladite pièce au niveau de la surface de contact préparée.

Ce type d'élément de réseau de retour de courant présente cependant quelques inconvénients.

La jonction électrique réalisée par les moyens de jonction est obtenue par une opération manuelle de métallisation, qui peut entraîner, de ce fait, quelques imperfections préjudiciables.

Ainsi, de faibles quantités de mastic ou de peinture prises entre le moyen de jonction et la pièce métallique considérée suffisent à dégrader la qualité du contact électrique. Cela peut entraîner une élévation locale de la température et donc une fatigue prématurée des pièces, ainsi qu'une altération locale de la conductivité électrique.

De plus, l'utilisation de moyens rapportés de jonction rend nécessaire de réaliser un grand nombre d'opérations de métallisation, de préférence une pour chacun desdits moyens de jonction. Cette opération, manuelle, vient rallonger sensiblement le cycle de production de l'aéronef. Le cycle de surveillance et d'entretien de chaque jonction est également particulièrement augmenté. Cela conduit nécessairement à des coûts élevés de réalisation et de maintenance. US 5 127 601 A, WO2005/071788 A, US 2005/213278 A1 et FR 2 914 622 A décrivent des éléments de réseau pour aeronef.

### EXPOSÉ DE L'INVENTION

L'invention a principalement pour but de présenter un élément de réseau de retour de courant remédiant au moins partiellement aux inconvénients mentionnés ci-dessus relatifs aux réalisations de l'art antérieur.

Pour ce faire, l'invention a pour objet un élément de réseau de retour de courant pour aéronef comportant une pluralité de bandes électriquement conductrices entrecroisées et réalisée d'un seul tenant, espacées les unes des autres de manière à former entre celles-ci une pluralité d'ouvertures.

Ainsi, l'élément de réseau de retour de courant selon l'invention présente des jonctions électriques et structurales naturellement formées par les entrecroisements desdites bandes, du fait que l'élément de réseau qu'elles forment est réalisé d'un seul tenant. En d'autres termes, par la réalisation dudit élément de réseau en un seul tenant, lesdites bandes s'entrecroisent sans être superposées les unes aux autres au niveau des entrecroisements. Il n'est alors pas nécessaire de prévoir des moyens rapportés pour assurer la jonction électrique entre lesdites bandes. Le risque de perte de liaison entre les bandes est ainsi supprimé.

Toute dégradation des propriétés électriques au niveau des jonctions, ici des entrecroisements, est alors écartée.

De plus, l'invention permet de diminuer sensiblement la durée de cycle de production puisque les opérations de métallisation précédemment décrites ne sont plus nécessaires. La durée et les coûts de maintenance du réseau de retour de ligne sont également particulièrement réduits par rapport à l'art antérieur décrit plus haut.

Par ailleurs, le nombre de bandes peut être élevé de manière à former un maillage particulièrement fin, dans le but d'obtenir un élément de réseau présentant une grande fiabilité. A la différence de l'art antérieur, le nombre de bandes, et donc le nombre d'entrecroisements, n'augmente pas les éventuels risques de dégradation des propriétés électriques, ni la durée des cycles de production et de maintenance.

Par ailleurs, la géométrie dudit élément de réseau est facilement adaptable à celle de toute partie d'aéronef que l'on désire équiper d'un tel élément de réseau. A titre d'exemple, la disposition des bandes entrecroisées, et celle des ouvertures, peuvent être choisies en fonction de la géométrie des éléments d'aéronef le long desquels on souhaite faire cheminer lesdites bandes.

Chaque bande est de préférence rigide.

De préférence, lesdites ouvertures sont agencées de manière sensiblement périodique.

De préférence, lesdites bandes formant un entrecroisement sont sensiblement perpendiculaires l'une avec l'autre, de sorte à former des ouvertures sensiblement rectangulaires ou carrées.

Avantageusement, l'élément de réseau est monolithique. En d'autres termes, lesdites bandes sont réalisées dans un même matériau, ce qui rend sensiblement homogène la conductivité électrique au sein desdites bandes. Les éventuelles zones de température anormalement élevée localisées aux interfaces entre différents matériaux sont ainsi supprimées. Les risques de fatigue prématurée de l'élément de réseau sont donc diminués.

Le matériau peut être choisi parmi ceux présentant une conductivité importante, dans le but de limiter la chute de tension le long de l'élément de réseau. L'élément de réseau selon l'invention présente une forme générale ondulée. Par forme générale ondulée, on entend une forme générale présentant ou comportant des ondulations régulières et parallèles. La tenue mécanique est alors renforcée par la présence des ondulations.

De préférence, l'épaisseur desdites bandes est comprise entre 1mm et 5mm. L'épaisseur est de préférence sensiblement constante le long de chaque bande, et sensiblement identique pour toutes lesdites bandes. Selon l'invention, lesdites bandes sont entrecroisées de manière sensiblement perpendiculaire.

L'invention porte également sur une partie d'aéronef comprenant au moins un élément de réseau de retour de courant selon l'une quelconque des caractéristiques mentionnées ci-dessus.

Selon un mode de réalisation de l'invention, ladite partie d'aéronef comporte un plancher comprenant une pluralité de traverses, un élément de réseau étant en appui contre lesdites traverses. Ainsi, lesdites traverses ont une fonction de support, ou de maintien, dudit élément de réseau. Par ailleurs, celui-ci peut participer au renforcement structural dudit plancher.

Ledit élément de réseau peut être en appui contre la surface supérieure ou inférieure desdites traverses.

Ladite partie d'aéronef peut comporter des rails de plancher, ledit élément de réseau étant interposé entre lesdits rails et lesdites traverses. Ledit élément de réseau est alors de préférence en appui contre la surface supérieure des traverses.

Lesdits rails peuvent être des rails de siège montés sur un plancher passager, ou des rails de marchandises montés sur un plancher dit cargo.

Ladite partie d'aéronef peut également comporter au moins un support de câbles d'alimentation en courant électrique, ledit support de câbles étant monté sur ledit élément de réseau par des moyens de maintien. Ledit élément de réseau est alors de préférence en appui contre la surface inférieure des traverses.

Selon un autre mode de réalisation de l'invention, ladite partie d'aéronef peut comporter une portion de fuselage comprenant une pluralité de cadres de structure, ledit élément de réseau étant en appui contre lesdits cadres. Ledit élément de réseau peut alors participer au renforcement structural de ladite portion de fuselage.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans desquels :
La figure 1 est une vue de dessus d'un élément de réseau de retour de courant selon le premier mode de réalisation de l'invention ;
La figure 2 est une vue en coupe transversale d'un tronçon de fuselage représentant des possibilités de montage de l'élément de réseau de retour de courant sur un plancher passager ;
La figure 3 est une vue en perspective du tronçon de fuselage représenté sur la figure 2, montrant plus particulièrement les traverses et les rails de plancher ;
La figure 4A est une vue de dessous d'un élément de réseau de retour de courant selon un second mode de réalisation de l'invention représenté sur la figure 2, comprenant des moyens de maintien d'au moins un support de câbles d'alimentation électrique ;
La figure 4B est une vue partielle et agrandie en coupe transversale suivant le plan I-I de la figure 4A, montrant un exemple de support de câbles assemblé par lesdits moyens de montage à l'élément de réseau de retour de courant ; et
La figure 5 est une vue en perspective d'une partie d'un élément de réseau de retour de courant présentant une forme générale ondulée.

### EXPOSÉ DÉTAILLÉ DE MODES DE RÉALISATION PRÉFÉRÉS

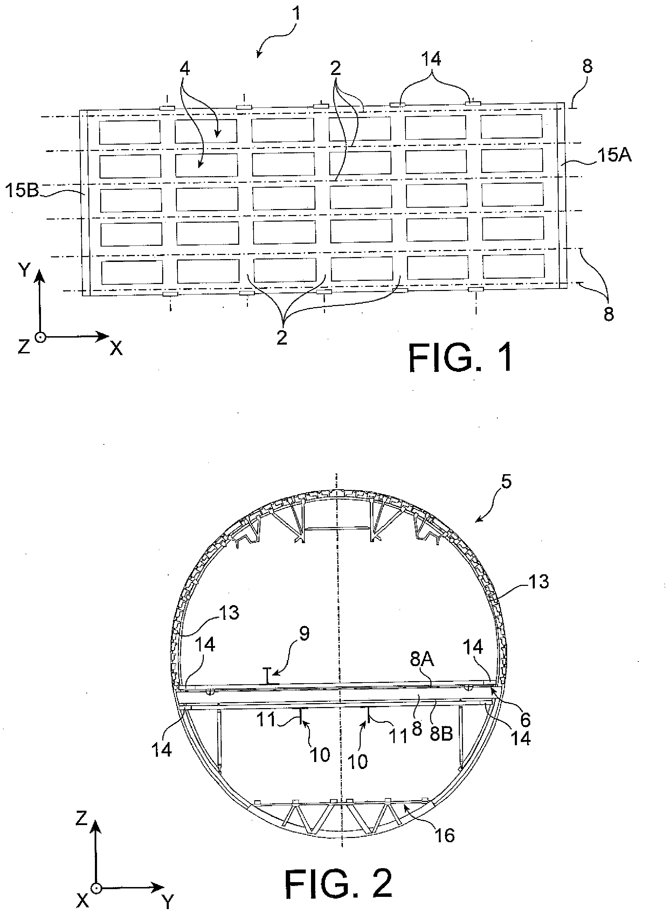

L'élément de réseau 1 de retour de courant selon le premier mode de réalisation préféré de l'invention est représenté schématiquement sur la figure 1 en vue de dessus.

Dans toute la description qui va suivre, par convention, on appelle X la direction longitudinale de l'aéronef, Y la direction orientée transversalement par rapport à l'aéronef, et Z la direction verticale, ces trois directions formant conjointement un repère orthogonal direct.

D'autre part, les termes « avant » et « arrière » sont à considérer par rapport à une direction d'avancement de l'aéronef obtenue à la suite de la poussée exercée par les moteurs de l'aéronef, cette direction coïncidant sensiblement avec la direction X.

L'élément de réseau 1 selon l'invention comprend une pluralité de bandes 2 électriquement conductrices entrecroisées et réalisée d'un seul tenant, espacées les unes des autres de manière à former entre celles-ci une pluralité d'ouvertures 4.

Ladite bande est une pièce dont la longueur est bien supérieure à sa largeur, par exemple deux fois plus longue.

L'épaisseur de ladite bande peut être égale ou inférieure à sa largeur, de préférence inférieure.

L'épaisseur peut être comprise entre 0,5 et 15 millimètres, de préférence entre 1 et 5 millimètres.

Chaque bande 2 présente une épaisseur et une largeur sensiblement constantes. De plus, l'épaisseur et la largeur sont sensiblement identiques pour toutes lesdites bandes 2.

Lesdites bandes 2 sont électriquement conductrices, par exemple en aluminium ou dans l'un de ses alliages. De préférence, elles sont réalisées dans un matériau dont la conductivité électrique est suffisante pour permettre le retour du courant, tant en étant résistant à la corrosion.

Lesdites bandes 2 s'entrecroisent de manière à former un maillage où chaque entrecroisement 3 forme un noeud du maillage. Elles sont espacées les unes des autres de manière à former entre elles-ci une pluralité d'ouvertures 4. Par ouverture, on entend un espace vide traversant ledit élément de réseau.

Lesdites ouvertures 4 sont agencées de manière sensiblement périodique, et lesdites bandes 2 formant un entrecroisement 3 sont sensiblement perpendiculaires l'une avec l'autre, de sorte à former des ouvertures 4 sensiblement rectangulaires ou carrées.

Lesdites bandes 2 sont réalisées d'un seul tenant, de manière à former conjointement une unique pièce. Aucun élément rapporté n'est donc nécessaire pour assurer la jonction structurale entre lesdites bandes. De plus, les bandes s'entrecroisent sans être superposées l'une à l'autre au niveau de l'entrecroisement.

La figure 2 montre une coupe transversale d'un fuselage 5 comportant un plancher passager 6.

Un élément de réseau 1 de retour de courant, tel que décrit ci-dessus, peut être monté sur le plancher 6, plus précisément sur la structure primaire du plancher 6.

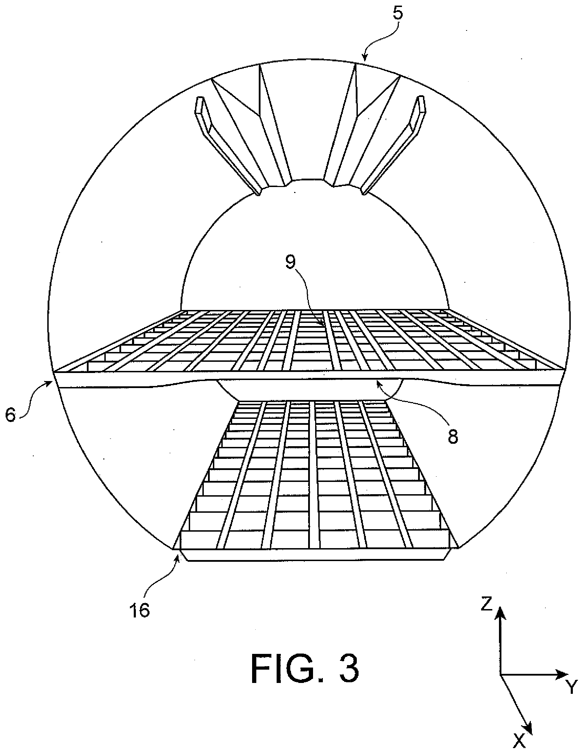

Comme le montre la figure 3, la structure primaire comprend une pluralité de longerons 7 s'étendant selon la direction longitudinale X de l'aéronef, et une pluralité de traverses 8 s'étendant selon la direction transversale Y.

Généralement, chaque traverse 8 est réalisée d'une seule pièce et s'étend dans la direction Y sur toute la largeur de la structure du plancher 6.

Les traverses 8 et les longerons 7 peuvent être réalisés en matériau métallique ou composite comprenant un mélange de fibres et de résine.

Il est à noter qu'il n'est plus nécessaire de réaliser l'opération de métallisation décrite précédemment au niveau de la jonction réalisée par les moyens rapportés de jonction assurant l'assemblage des traverses 8 et des longerons 7.

Ledit élément de réseau 1 peut être en appui contre la surface supérieure 8A ou inférieure 8B desdites traverses 8.

Par en appui contre, on entend disposé en contact direct ou indirect contre lesdites traverses 8. Le contact indirect peut être réalisé par l'intermédiaire d'un mastic d'interposition.

Les termes « supérieur » et « inférieur » sont à considérer par rapport à la direction verticale Z de l'aéronef.

L'élément de réseau 1 peut être fixé aux traverses 8 par rivetage ou boulonnage, ou par des connecteurs verrouillables.

De préférence, ledit élément de réseau 1 comprend, pour chaque traverse 8 de plancher, une bande 2 disposée en regard de ladite traverse 8, comme le montre la figure 1 où chaque ligne en pointillé symbolise une traverse 8. Ainsi, ladite bande longe ladite traverse 8 en regard de laquelle elle est disposée.

Ledit élément de réseau 1 peut présenter un nombre de bandes 2 en regard desdites traverses 8 inférieur au nombre de celles-ci. Par exemple, une bande 2 peut être disposée en regard d'une traverse 8 toutes les deux ou trois traverses, voire davantage. Ledit élément de réseau 1 présente alors une masse réduite, participant ainsi à l'exigence générale d'économie de masse.

Par ailleurs, les figures 2 et 3 montrent des rails métalliques 9 qui peuvent être montés sur la structure du plancher, par exemple des rails 9 assurant la fixation de sièges passagers (non représentés).

Les rails 9 s'étendent habituellement suivant l'axe longitudinal X du fuselage et sont reliés les uns aux autres par des traverses 8 qui s'étendent perpendiculairement à celles-ci.

Ledit élément de réseau 1 est alors avantageusement interposé entre lesdits rails 9 et lesdites traverses 8.

De préférence, ledit élément de réseau 1 comporte des bandes 2 orientées suivant la direction longitudinale des rails 9.

Avantageusement, une bande 2 est disposée en regard de chaque rail 9.

Ainsi, des bandes peuvent longer lesdits rails 9 et d'autres bandes du même élément de réseau 1 peuvent longer lesdites traverses 8.

Avantageusement, lesdits rails 9 participent à la formation du réseau de retour de courant en reliant électriquement les appareils électriques éventuellement disposés au niveau des sièges passagers audit élément de réseau 1 de retour de courant.

Par ailleurs, le réseau de retour de courant peut comprendre un élément de réseau 1 en appui sur la surface supérieure 8A des traverses 8 et/ou un élément de réseau 1 en appui contre la surface inférieure 8B des traverses 8.

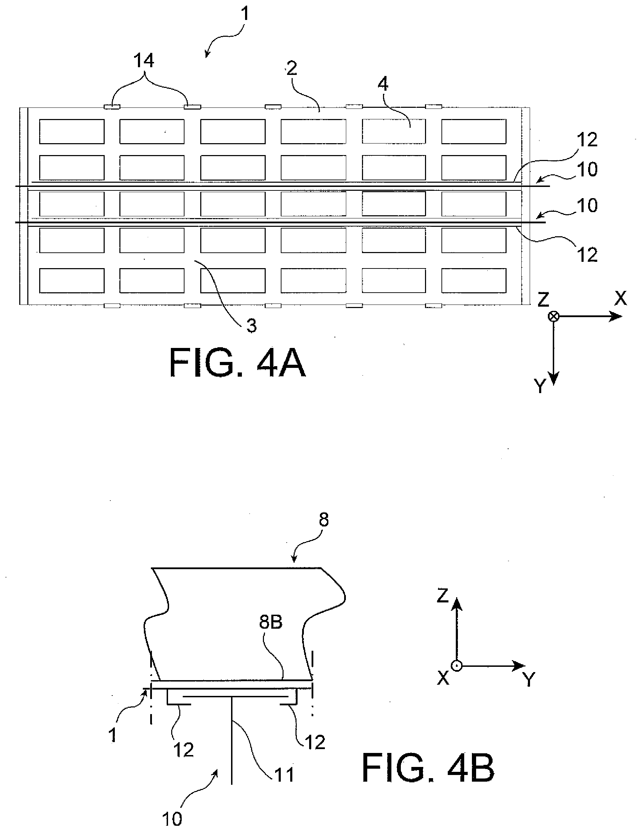

Dans le cas d'un élément de réseau 1 en appui contre la surface inférieure 8B des traverses 8, et comme le montrent les figures 2 et 4A, des supports 10 de câbles d'alimentation électrique, tels que décrits dans la demande de brevet FR2905038 déposée au nom de la demanderesse, peuvent être montés sur ledit élément de réseau 1.

Lesdits supports 10 pour câbles électriques peuvent comporter un corps profilé 11 métallique qui participe au retour du courant circulant dans les câbles.

Chaque support 10 pour câbles peut être monté sur ledit élément de réseau par l'intermédiaire de moyens de maintien 12 (figure 4B).

Lesdits moyens de maintien 12 peuvent être métalliques, de manière à assurer une continuité électrique avec lesdits supports 10 pour câbles.

Lesdits supports 10 peuvent également assurer le support de harnais, et participer à la protection contre les effets indirects de la foudre.

Ces moyens de maintien 12 peuvent être un couple de rails 12 en U soudés ou fixés à la surface inférieure dudit élément de réseau 1, tel que représenté sur la figure 4B. Les deux rails 12 sont disposés de sorte à coopérer avec le corps profilé 11 en forme de T dudit support 10 pour câbles.

Dans l'exemple de la figure 4A, lesdits moyens de maintien 12 s'étendent tout le long dudit élément de réseau 1 de façon continue. Ils peuvent alternativement s'étendre de façon discontinue.

Ces supports 10 pour câbles peuvent ainsi améliorer la rigidité structurale dudit élément de réseau 1.

De préférence, chaque élément de réseau 1, qu'il soit en appui sur la surface supérieure 8A ou inférieure 8B des traverses 8, s'étend suivant la direction transversale Y sur toute la largeur du plancher 6.

Par ailleurs, ledit élément de réseau 1 peut être monté sur des cadres 13 de structure du fuselage de l'aéronef, par des moyens d'accroche 14 disposés au niveau de ses bordures latérales, comme le montrent les figures 1 et 2. Il peut être fixé par rivetage ou boulonnage, ou par des connecteurs verrouillables.

Ces cadres 13, dans la mesure où ils sont métalliques, peuvent participer à la formation du réseau de retour de courant et ainsi coopérer avec ledit élément de réseau 1 de retour de courant.

D'une manière générale, ledit élément de réseau 1 présente avantageusement une structure modulaire, et permet ainsi la disposition suivant la direction longitudinale X et/ou la direction transversale Y d'une pluralité d'éléments de réseau 1 successifs de manière à s'étendre sensiblement sur toute la longueur et/ou la largeur du plancher 6.

Dans le cas d'une disposition suivant la direction longitudinale X, et comme le montre la figure 1, chaque élément de réseau 1 comporte alors des moyens 15 de jonction électrique permettant d'assurer la continuité électrique entre l'élément de réseau 1 voisin. Ces moyens 15A, 15B de jonction électrique peuvent être des zones de contact disposées respectivement sur la partie avant d'un premier élément de réseau 1 et sur la partie arrière du second élément de réseau 1 consécutif.

De la même manière, dans le cas d'une disposition suivant la direction transversale Y (variante non représentée), des moyens 15 de jonction électrique peuvent être prévus au niveau des bordures latérales de chaque élément de réseau 1.

Bien entendu, chaque élément de réseau peut comprendre des éléments 15 de jonction électrique dans le but de disposer une pluralité d'éléments de réseau 1 à la fois suivant les directions longitudinale X et transversale Y.

Il est à noter que, bien que la figure 2 décrive un élément de réseau de retour de courant monté sur un plancher passager 6, ledit élément de réseau peut également être monté sur un plancher dit cargo 16 pour marchandises.

Dans un mode de réalisation non représenté, ledit élément de réseau peut être en appui contre une pluralité de cadres de fuselage 13, sur une portion longitudinale du fuselage 5. Ainsi, tout en participant à la rigidité de cette portion de fuselage, ledit élément de réseau 1 assure le retour de courant des appareils électriques qui peuvent être placés dans une partie supérieure ou inférieure du fuselage 1.

Ledit élément de réseau peut également présenter une structure modulaire comme décrite précédemment.

Enfin, l'élément de réseau 1 peut présenter une forme générale ondulée.

Par forme générale ondulée, on entend une forme générale présentant ou comportant des ondulations régulières et parallèles.

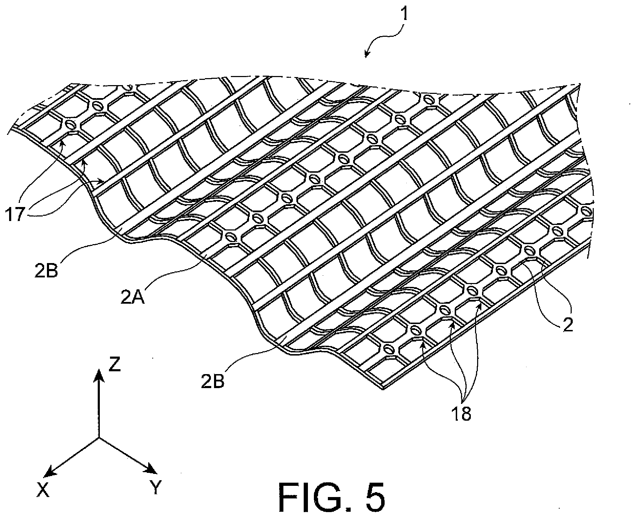

Comme l'illustre la figure 5, l'élément de réseau comprend une première pluralité 17 de bandes 2 s'étendant suivant une première direction, qui s'entrecroise avec une seconde pluralité 18 de bandes 2 s'étendant suivant une seconde direction. L'entrecroisement et la réalisation d'un seul tenant desdites bandes sont identiques à ce qui a été décrit précédemment.

Les première et seconde directions sont ici sensiblement orthogonales et coïncident sensiblement avec les directions longitudinale X et transversale Y, respectivement. Alternativement, elles peuvent définir entre elles un angle non nul différent de 90°.

Chaque bande 2 de ladite première pluralité 17 s'étend de manière sensiblement plane suivant la direction X, alors que chaque bande 2 de ladite seconde pluralité 18 s'étend de manière ondulée sensiblement suivant la direction Y. Ainsi, les bandes 2 de ladite seconde pluralité 18 présentent chacune une succession de parties concaves et de parties convexes.

Pour chaque période d'ondulation, ladite première pluralité 17 de bandes 2 comporte une bande 2A définissant la crête haute de l'ondulation considérée et une bande 2B définissant la crête basse de ladite ondulation.

L'élément de réseau 1 peut comporter des ouvertures de fixation disposées au niveau des croisements entre chacune des bandes 2A et les bandes 2 de la seconde pluralité 18. Aussi, l'élément de réseau 1 peut être monté, par exemple, sur un plancher d'aéronef par l'intermédiaire des bandes 2A mises en appui contre le plancher, comme décrit précédemment. Des moyens de montage, du type rivets, boulons ou connecteurs verrouillables, sont alors disposés au travers des ouvertures de fixation.

Les bandes 2B ne sont alors pas en appui contre le plancher, et peuvent notamment servir au maintien de harnais.

Il est à noter que la forme générale de l'élément de réseau reste ici sensiblement plane. En effet, l'ensemble des bandes 2A de la première pluralité 17 est sensiblement contenu dans un même plan. De même, l'ensemble des bandes 2B est sensiblement contenu dans un même plan, celui-ci étant parallèle au plan des bandes 2A.

Alternativement, la forme générale de l'élément de réseau 1 peut être sensiblement courbe, notamment lorsque celui-ci est monté sur une pluralité de cadres de fuselage d'une portion de fuselage, comme décrit précédemment. Dans ce cas, l'ensemble des bandes 2A de la première pluralité 17 est sensiblement contenu dans une même surface courbe. De même, l'ensemble des bandes 2B est sensiblement contenu dans une même surface courbe, celle-ci étant parallèle à la surface courbe des bandes 2A.

Quels que soient les modes de réalisation décrits précédemment de l'élément de réseau selon l'invention, celui-ci peut être réalisé par détourage d'une tôle ondulée ou non, par exemple par découpe laser, ou à partir de métal déployé.

Bien entendu, diverses modifications peuvent être apportées par l'homme du métier à l'invention qui vient d'être décrite, uniquement à titre d'exemple non limitatif.

## Revendications

1. Elément de réseau (1) de retour de courant pour aéronef, **caractérisé en ce qu'**il comporte une pluralité de bandes (2) rigides électriquement conductrices entrecroisées et réalisée d'un seul tenant, espacées les unes des autres de manière à former entre celles-ci une pluralité d'ouvertures (4), l'élément de réseau (1) de retour de courant présentant une forme générale ondulée et comprenant une première pluralité (17) de bandes (2) s'étendant suivant une première direction et une seconde pluralité (18) de bandes (2) s'étendant de manière ondulée suivant une deuxième direction et s'entrecroisant avec ladite première pluralité (17) de bandes (2) de manière sensiblement perpendiculaire.

2. Elément de réseau (1) selon la revendication 1, **caractérisé en ce qu'**il est monolithique.

3. Elément de réseau (1) selon la revendication lou 2, **caractérisé en ce que** l'épaisseur desdites bandes (2) est comprise entre 1mm et 5mm.

4. Partie d'aéronef comprenant au moins un élément de réseau (1) de retour de courant selon l'une quelconque des revendications 1 à 3.

5. Partie d'aéronef selon la revendication 4, **caractérisée en ce qu'**elle comporte un plancher (6) comprenant une pluralité de traverses (8), un élément de réseau (1) étant en appui contre lesdites traverses (8) .

6. Partie d'aéronef selon la revendication 5, **caractérisée en ce que** ledit élément de réseau (1) est en appui contre la surface supérieure (8A) ou inférieure (8B) desdites traverses (8).

7. Partie d'aéronef selon la revendication 5 ou 6, **caractérisée en ce qu'**elle comporte des rails de plancher (9), ledit élément de réseau (1) étant interposé entre lesdits rails (9) et lesdites traverses (8) .

8. Partie d'aéronef selon l'une quelconque des revendications 5 à 7, **caractérisée en ce qu'**elle comporte au moins un support de câbles (10) d'alimentation en courant électrique, ledit support de câbles (10) étant monté sur ledit élément de réseau (1) par des moyens de maintien (12).

9. Partie d'aéronef selon la revendication 4, **caractérisée en ce qu'**elle comporte une portion de fuselage (5) comprenant une pluralité de cadres de structure (13), ledit élément de réseau (1) étant en appui contre lesdits cadres (13).

## Patentansprüche

1. Stromrückführungsnetzelement (1) für ein Flugzeug, **dadurch gekennzeichnet, dass** es mehrere elektrisch leitfähige starre Bänder (2) umfasst, die verflochten und einteilig hergestellt sind und voneinander beabstandet sind, um zwischen ihnen mehrere Öffnungen (4) zu bilden, wobei das Stromrückführungsnetzelement (1) eine allgemeine Wellenform aufweist und mehrere erste (17) Bänder (2), die sich in einer ersten Richtung erstrecken, und mehrere zweite (18) Bänder (2), die sich in gewellter Weise in einer zweiten Richtung erstrecken und mit den mehreren ersten (17) Bändern (2) in im Wesentlichen senkrechter Weise verflochten sind, umfasst.

2. Netzelement (1) nach Anspruch 1, **dadurch gekennzeichnet, dass** es monolithisch ist.

3. Netzelement (1) nach Anspruch 1 oder 2, **dadurch gekennzeichnet, dass** die Dicke der Bänder (2) zwischen 1 mm und 5 mm liegt.

4. Flugzeugteil mit mindestens einem Stromrückführungsnetzelement (1) nach einem der Ansprüche 1 bis 3.

5. Flugzeugteil nach Anspruch 4, **dadurch gekennzeichnet, dass** es einen Fußboden (6) mit mehreren Querstreben (8) umfasst, wobei ein Netzelement (1) an den Querstreben (8) anliegt.

6. Flugzeugteil nach Anspruch 5, **dadurch gekennzeichnet, dass** das Netzelement (1) an der oberen Oberfläche (8A) oder unteren Oberfläche (8B) der Querstreben (8) anliegt.

7. Flugzeugteil nach Anspruch 5 oder 6, **dadurch gekennzeichnet, dass** es Fußbodenschienen (9) umfasst, wobei das Netzelement (1) zwischen die Schienen (9) und die Querstreben (8) eingefügt ist.

8. Flugzeugteil nach einem der Ansprüche 5 bis 7, **dadurch gekennzeichnet, dass** es mindestens einen Träger (10) für Kabel zur Versorgung mit elektrischem Strom umfasst, wobei der Kabelträger (10) an dem Netzelement (1) durch Haltemittel (12) montiert ist.

9. Flugzeugteil nach Anspruch 4, **dadurch gekennzeichnet, dass** es einen Rumpfabschnitt (5) mit mehreren Strukturrahmen (13) umfasst, wobei das Netzelement (1) an den Rahmen (13) anliegt.

## Claims

1. Current return network element (1) for aircraft, **characterised in that** it comprises a plurality of electrically conducting stiff strips (2) intersecting each other and made from a single piece, at a spacing from each other so as to form a plurality of openings (4) between them, the current return network element (1) having a generally corrugated shape and comprising a first plurality (17) of strips (2) extending along a first direction and a second plurality (18) of strips (2) extending in a corrugated manner along a second direction and intersecting with said first plurality (17) of strips (2) in an approximately orthogonal manner.

2. Network element (1) according to claim 1, **characterised in that** it is monolithic.

3. Network element (1) according to claim 1 or 2, **characterised in that** the thickness of said strips (2) is between 1mm and 5mm.

4. Part of an aircraft comprising at least one current return network element (1) according to any one of claims 1 to 3.

5. Aircraft part according to claim 4, **characterised in that** it comprises a floor (6) comprising a plurality of cross beams (8), a network element (1) bearing in contact with said cross beams (8).

6. Aircraft part according to claim 5, **characterised in that** said network element (1) is bearing in contact with the upper surface (8A) or the lower surface (8B) of said cross beams (8).

7. Aircraft part according to claim 5 or 6, **characterised in that** it comprises floor rails (9), said network element (1) being inserted between said rails (9) and said cross beams (8).

8. Aircraft part according to anyone of claims 5 to 7, **characterised in that** it comprises at least one electrical power supply cable support (10), said cable support (10) being mounted on said network element (1) by restraining means (12).

9. Aircraft part according to claim 4, **characterised in that** it comprises a fuselage portion (5) comprising a plurality of structural frames (13), said network element (1) being supported in contact with said frames (13).
